# EUROPEAN PATENT APPLICATION

(11) **EP 1 717 019 A2**
(43) Date of publication of application: **02.11.2006**
(21) Application number: 06008330.0
(22) Date of filing: 21.04.2006
(51) Int. Cl.: B32B 5/22, D04H 13/00, G10K 11/16

(54) **Sound absorbing laminates**

(30) Priority: 27.04.2005 US 115474
(71) Applicant: AIR PRODUCTS POLYMERS, L.P., Allentown, PA 18195-1501 (US)
(72) Inventor: Rabasco, John Joseph, Allentown PA 18104 (US); Hanus, Scott Alan, TX (US); Matelan, Deborah Ann, Emmaus PA 18049 (US)
(74) Representative: Kador & Partner

(57) **Abstract**

A process for forming sound absorbing laminates and the resulting laminate which comprises at least one layer of nonwoven fibers bonded to a substrate by a thermoplastic adhesive. The laminate is formed by placing a layer of bonded nonwoven fibers into contact with a substrate and bonding the layer of nonwoven fibers to the substrate. The improvement comprises:
utilizing at least one layer of nonwoven fibers coated with an aqueous emulsion of a vinyl acetate-ethylene (VAE) adhesive and then dried. The VAE adhesive is prepared by aqueous emulsion polymerization, contains crystalline ethylene segments and has:
(a) a crystalline melting point (Tₘ) ranging from 35 to 110 °C, preferably 50 to 100 °C; measured at a heat rate of 20 °C/minute; and,
(b) a tensile storage modulus of at least 1 x 10⁴ dynes/cm² at 115 °C measured at a test frequency of 6.28 rad/sec.

## Description

### BACKGROUND OF THE INVENTION

It is well known in the art to provide acoustical and thermal insulators on automobiles, trucks or other vehicles in an effort to protect and insulate the operating or passenger compartment from the noise and heat generated by the mechanical equipment of the associated vehicle. Toward this end, mats of high temperature glass fibers have been utilized, e.g., (a) on the fire wall between the dashboard and engine compartment and (b) along the floor pan of the vehicle between the passenger compartment and the drive line and exhaust system. These materials provide heat insulation which makes it possible to maintain cooler and more comfortable temperatures in the operator/passenger compartment particularly during the summer months. Additionally, these materials provide sound insulation, reducing or eliminating various mechanical sounds of the motor, drive train, as well as the suspension and tires, as the vehicle travels over the often rough and bumpy surface of the roadway.

In the past, sound proofing laminates have been formed by molding them from fiberglass reinforced polyester resin, often in a lay up molding process, as distinguished from thermoforming. Thermoforming as opposed to lay up molding is cost effective. Laminates of thermoformable polystyrene foam layer bonded to a layer of kraft paper or a polymer film material bonded to either side of the polystyrene foam and covered with a soft polyurethane backed fabric are known. Many have endeavored to eliminate the paper or polymer film covering, from such laminates, and substitute a nonwoven fabric mat on one or both sides of the stiff polystyrene foam element in order to achieve better sound absorbing properties. The structural foam polystyrene-nonwoven fabric laminate tends to delaminate and/or sag when exposed to high temperatures. One reason for this is that the adhesive used to form the laminate components has to be thermoplastic or equivalent in order to be thermoformable. Thermoplastic adhesives having high melting points tend to lack the desired adhesiveness for adhering the foam core layer to the outer layers of the laminate.

Automobile manufacturers and other fabricators currently apply hot melt adhesives as the thermoplastic adhesive onsite to nonwoven substrates, such as shoddy pads. Hot melt adhesives must be heated to temperatures ranging from 250 °F to 350 °F in order to have proper flow over the surface of the substrate. After applying the hot melt adhesive to the nonwoven substrate, it is placed in a mold with a foam layer and often with another layer of nonwoven substrate and subjected to elevated temperature and pressure thereby forming a laminate.

The onsite application of hot melt adhesives to nonwoven substrates has created numerous processing issues which often result in run delays and maintenance problems. Hot melt adhesives, which are applied in molten form to the nonwoven substrates, typically are 100 percent solid and often based on ethylene-vinyl acetate polymers. Because of the high temperatures for application of hot melt adhesives, there are the customary health issues resulting from burns and odors. In addition, there are significant issues with respect to the storage and delivery systems for hot melt adhesives and the maintenance thereof.

The following patents are representative of sound absorbing laminate formulations for use in automotive applications and methods for producing such sound proofing laminates:

US 5,068,001 discloses a method of making a sound absorbing laminate comprised of a resilient porous fibrous core layer adhered to a fibrous, porous reinforcing mat. A thermosetting polymer is impregnated into the fibrous porous mat prior to molding the laminate. The laminate sets when heated in the mold.

US 5,296,657 discloses a method for forming sound-deadening laminates in vehicles comprised of a polyester fiber sheets impregnated with a thermoplastic adhesive where the impregnant is a carboxylated styrene-butadiene copolymer. The material is cut to shape and molded to the desired shape.

US 2003/0077969 discloses a sound absorption material having excellent moldability comprised of a filament nonwoven fabric and a staple fiber nonwoven fabric laminated and integrated with a thermally adhesive fiber having a melting point below 100 °C. Polyethylene or polyester foams can be incorporated into the sound absorption material. Example 2 shows laminating a melt blown nonwoven fabric of polyester to a polyethylene foam using a urethane based emulsion resin.

US 6,572,723 discloses a method of forming a multilayer composite insulator for acoustic and thermal applications found in automotive products. In the process, an insulator is oriented in position between a first facing and a first and second layer of a polymer blanket. Then, heat and pressure are applied to bond the insulator precursor and convert it to a desired shape.

US 5,971,099 discloses a soundproof material comprised of a substrate and an assembly of fibers made from different thermoplastic resins. These fibers are bonded using ultrasonic vibration to melt the fibers.

US 6,659,223 discloses sound attenuating materials for use in vehicles based upon first, second and third layers of materials joined together. The first layer is an acoustic fiber barrier. The second layer is a thermoplastic layer, e.g., polyethylene, ethylene-vinyl acetate (EVA) polymer or polypropylene which is fused to the first layer by extrusion and the third layer is a thermoplastic material fused to the surface of the second layer. In the formation of the laminate, the layers are compressed via nip rollers, placed within a mold and heated.

### BRIEF SUMMARY OF THE INVENTION

The invention relates to an improvement in a process for forming sound absorbing laminates suited for use in automotive products and the resulting laminate. Often the laminates are comprised of nonwoven substrates, e.g., shoddy pads of varying density, e.g., a high loft polyester of thermobonded nonwoven fibers. A basic sound absorbing laminate has at least one layer of nonwoven fibers bonded to a substrate by a thermoplastic adhesive. The laminate is formed by placing a layer of bonded nonwoven fibers into contact with a substrate and applying sufficient heat to bond the layer of nonwoven fibers to the substrate. The improvement in the process and the resulting laminate comprises:
utilizing at least one layer of nonwoven fibers initially coated with an aqueous emulsion of a vinyl acetate-ethylene (VAE) adhesive and then the water removed therefrom. The VAE adhesive is characterized as being prepared by the aqueous emulsion polymerization of ethylene and vinyl acetate in the presence of a stabilizing system, said VAE polymer containing crystalline ethylene segments and having:
   (a) a crystalline melting point (Tₘ) ranging from 35 to 110 °C, preferably 50 to 100 °C; measured at a heat rate of 20 °C/minute; and,
   (b) a tensile storage modulus of at least 1 x 10⁴ dynes/cm² at 115 °C measured at a test frequency of 6.28 rad/sec.

In addition, the emulsion polymerized vinyl acetate-ethylene adhesive polymer should have (c) a crystalline heat of fusion (ΔH_{f}) ranging from 5 to 100 joules per gram (J/g), preferably 15 to 70 J/g; (d) a glass transition temperature (T_{g}) of + 25 °C to about -35 °C, and (e) be non-blocking at temperatures of about 50 °C.

Significant advantages can be obtained by using the described VAE adhesive composition for forming sound absorbing laminates such as those employed for the automotive industry, and these include:
an excellent balance of block resistance and rapid flow at elevated pressures and temperatures for nonwoven substrate lamination;
an ability to eliminate the problems of onsite application of hot melt adhesives such as nozzle plugging, burns, etc.;
an ability to use lower temperatures in laminate formation than is commonly used when molten fibers are used as the adhesive;
an ability to eliminate an application step in the final laminate manufacture process because the adhesive is pre-applied and dried on the web surface for ease of handling and application; and,
an ability to effect excellent adhesion to nonwoven substrates, and bond such substrates over a broad temperature range.

### DETAILED DESCRIPTION OF THE INVENTION

In the manufacture of laminated nonwoven substrates suited for use as sound absorbing and thermal protection in automotive products, an aqueous emulsion containing the VAE adhesive is applied to at least one side of a nonwoven substrate and, then, the nonwoven substrate dried. This coated and dried nonwoven substrate, which is employed as a feedstock, generally is either rolled upon itself or flat sections cut and stacked one sheet upon another for storage and shipment to end users.

In the sound absorbing laminate manufacturing process, the adhesive coated nonwoven substrate is unrolled or unstacked and the adhesive side of the adhesive coated nonwoven substrate is placed in contact with a second nonwoven substrate, foam, fabric, or the like. Often the adhesive coated nonwoven web is placed on each side of the second nonwoven substrate, foam or fabric, forming a multilayer laminate. The resulting laminate is then placed in a mold, and elevated temperature and pressure is applied in order to activate the adhesive and seal the laminate layers into the desired molded shape. Temperatures and pressures for the molding process can vary over a wide range and are dependent on the construction of the laminate and the final application for the laminate.

The heat seal adhesive employed in forming a molded nonwoven substrate or web structure is critical to the improved process and provides the ability to achieve some of the aforementioned advantages. The heat seal adhesive employed in this improved process for producing a nonwoven substrate or web structure is an aqueous-based semi-crystalline VAE copolymer emulsion, wherein the polymer contains crystalline ethylene segments. The heat seal adhesives are prepared via direct aqueous-based free radical emulsion polymerization of vinyl acetate and ethylene and, optionally various other monomers. The semi-crystalline aqueous-based emulsion polymers employed in forming the nonwoven laminate structure have (a) a Tₘ ranging from 35 to 110 °C, preferably 50 to 90 °C, measured at a heat rate of 20 °C/minute, and, (b) a tensile storage modulus of at least 1 x 10⁴ dynes/cm² at 115 °C measured at a test frequency of 6.28 rad/sec. In addition, the preferred adhesive should have (c) a crystalline heat of fusion ranging from 5 to 100 joules per gram (J/g), preferably 15 to 70 J/g, (d) a T_{g} of + 25 °C to about -35 °C, and (e) be non-blocking at temperatures of about 50 °C.

The aqueous-based based polymer emulsions contain crystalline segments resulting from ethylene linkages and are prepared by the emulsion polymerization of ethylene and vinyl acetate, optionally with small amounts of other co-monomers, preferably with a carboxylic acid monomer, in the presence of a stabilizing system consisting essentially of at least one surfactant or a protective colloid in combination with a surfactant. A relatively low-pressure process, i.e., less than 2000 psig (13,891 kPa), preferably from about 1000 (6,996 kPa) to about 2000 psig (18,891 kPa) can be used to effect polymerization.

The aqueous based polymer emulsions are based upon vinyl acetate and ethylene with the level of polymerized units of vinyl acetate ranging from 15 to 90% by weight of the polymer and the level of polymerized units of ethylene ranging from 10% to 85% by weight, preferably from 25 to 80 weight percent vinyl acetate and 20 to 75% by weight ethylene, and most preferably from 35 to 75% by weight vinyl acetate and 25 to 65% by weight ethylene. A preferred embodiment of this aqueous based polymer emulsion is comprised of 30 to 50 wt % vinyl acetate and 50 to 70 wt % ethylene. The distribution of vinyl acetate and of ethylene in the copolymer are accounted for in other parameters of the polymer, i.e., the T_{g}, Tₘ, ΔH_{f}, and the high temperature tensile storage modulus.

Other monomers, which can be emulsion polymerized into the polymer, generally in small amounts include, but are not limited to, a C₁ to C₁₅ alkyl vinyl ester, a C₁ to C₁₅ alkyl acrylate or a C₁ to C₁₅ alkyl methacrylate, such as methyl (meth)acrylate, ethyl (meth)acrylate, propyl (meth)acrylate, butyl (meth)acrylate, and 2-ethylhexyl (meth)acrylate, a C₁ to C₆ hydroxyalkyl (meth)acrylate, such as, hydroxyethyl (meth)acrylate and hydroxypropyl (meth)acrylate, a C₁ to C₁₅ alkyl maleate, C₁ to C₁₅ alkyl fumarate, acrylic acid, methacrylic acid. N-methylol amides, C₁-C₄ alkanoic acid ethers of N-methylol amides and allylcarbamates, such as acrylonitrile, acrylamide, methacrylamide, N-methylol acrylamide, N-methylol methacrylamide, N-methylol allylcarbamate, and C₁-C₄ alkyl ethers or C₁-C₄ alkanoic acid esters of N-methylol acrylamide, sodium vinyl sulfonate; and 2-acrylamido-2-methyl propanesulfonate. The monomers can be incorporated in minor amounts, e.g. from 0 to about 10% by weight. The preferred levels of the above additional monomers other than carboxylic acid is less than about 2%.

Carboxylic acids can be used as a preferred additional monomer in the formation of the VAE polymers. These carboxylic acids include C₃-C₁₀ alkenoic acids, such as acrylic acid, methacrylic acid, crotonic acid, and isocrotonic acid, and alpha, beta-unsaturated C₄-C₁₀ alkenedioic acids such as maleic acid, fumaric acid, and itaconic acid. Typically, these acids are incorporated in an amount of from 0 to 10% by weight and preferably 0.2 to 10% by weight of the polymer. Exemplary polymers for heat seal applications have a vinyl acetate content of from 15 to 80%, an ethylene content of from 20 to 85%, and a carboxylic acid content of from 0.5 to 5% by weight of the polymer.

The usefulness of VAE emulsion polymers and their application here is dictated by the polymer properties which are in turn are affected by many factors outside the specific formulation employed, e.g., the monomers employed, the monomer ratio, the initiator level and the surfactant package, as well as in the polymerization procedure. For example, because vinyl acetate and ethylene have significantly different vapor pressures when subjected to the polymerization conditions described herein and because ethylene is difficult to solubilize in the polymerization medium, one can dramatically affect the distribution of the vinyl acetate and ethylene within the polymer. Thus, two polymers having substantially equal levels of vinyl acetate and ethylene can have substantially different structures and dramatically different properties.

It has been found that in the development of polymers for forming nonwoven laminate structures by emulsion polymerization that the concentration of vinyl acetate and ethylene in the polymer is not solely responsible for its use as a heat seal adhesive. The distribution of vinyl acetate and ethylene is a major factor. It has been found that there needs to be a sufficient level of amorphous ethylene polymer segments to provide adhesion to a substrate and a sufficient level of crystalline ethylene polymer segments to provide the proper balance of heat seal characteristics and non-blocking. Polymerized ethylene segments lead to ethylene crystallinity in the polymer. Too much of one and too little of another can lead to polymers which have little adhesion in terms of hot green strength and room temperature adhesive strength, but pass the non-blocking test or they may have desired adhesion but do not meet the non-blocking test at desired temperature and pressure.

The T_{g} of the VAE polymer can be controlled by adjusting the ethylene content, i.e., generally the more ethylene present in the polymer relative to other co-monomers, the lower the T_{g}. However, it has been found that under certain polymerization conditions where formation of crystalline polyethylene domains is favored, the T_{g} does not continue to systematically decrease in proportion to the increase in ethylene concentration.

Crystalline polyethylene domains in the polymer impart a Tₘ and ΔH_{f} to the polymer. It has also been found that by influencing the balance of amorphous ethylene-vinyl acetate domains and crystalline ethylene domains in the polymer, one can generate a range of aqueous copolymer dispersions containing a range of T_{g}, Tₘ and ΔH_{f}, and a high tensile storage modulus at high temperatures; i.e., temperatures of about 115 °C. In conventional VAE emulsion polymers, the ethylene units are largely incorporated in an amorphous state and there is a substantial absence of crystalline ethylene domains.

One preferred way to enhance crystalline domain formation of ethylene in the VAE polymer is to delay the addition of vinyl acetate during the polymerization process such that the unreacted vinyl acetate level present in the reactor is minimal at different stages during the process, i.e., below 5% unreacted free vinyl acetate monomer. One preferred embodiment is to stage the addition of vinyl acetate in the polymerization process over an initial period of time. Typically, one completes the addition of vinyl acetate within 75% of the total polymerization period and generally within 3 hours or less. Thus, VAE polymerization can take place in one stage of the polymerization process where most, but not all, of the ethylene will reside in amorphous regions, and the formation of the majority of crystalline ethylene domains can occur in another stage of the polymerization process.

The tensile storage modulus profile for these polymers provides an insight to the distribution of vinyl acetate and ethylene in the polymer and the melt flow characteristics. The polymers suited for use as heat seal laminating adhesives for forming nonwoven laminate structures having sound absorbing properties as described herein generally have a high tensile storage modulus and are highly viscous with minimal flow properties at temperatures where other EVA hot melt polymers melt and exhibit melt flow characteristics. The polymers described herein maintain a high viscosity and resistance to flow at temperatures well above their melt temperatures. The modulus should be at least 1 x 10⁴ in dynes/cm² (preferably 2 x 10⁴) at 115 °C, as measured at a test frequency of 6.28 rad/sec.

Other factors leading to crystalline ethylene domains within the polymer include pressure, temperature of polymerization and initiator level. Although pressure is influential in achieving higher ethylene concentration levels in the polymer, it also is a factor in determining whether the amount of ethylene which is present is in amorphous regions or crystalline domains. Temperature also is relevant in the formation of ethylene crystallinity. Lastly, the level of initiator is also a factor in developing copolymers for pre-applied, heat seal applications.

In the preferred process for effecting polymerization and the formation of VAE polymers for use as laminating adhesives for forming nonwoven laminate structures, polymerization of ethylene, vinyl acetate, and preferably including a functional comonomer, is initiated by thermal initiators or by redox systems. Typically, the level of initiator is at least 0.3% and typically greater than 0.8% by weight of the total monomer charged. In addition, it is preferred that the initiator is added over the time of polymerization. It is believed that a high radical flux created by the higher levels of initiator facilitates ethylene incorporation during this low pressure polymerization process and leads to crystalline ethylene segments and a branched polymer architecture in the resulting copolymer and thus exhibits a higher tensile storage modulus at elevated temperatures, thermal melting point, and a heat of fusion. Thermal initiators are well known in the emulsion polymer art and include, for example, ammonium persulfate, sodium persulfate, azo derivatives, and the like. Suitable redox systems are based upon oxidizing and reducing agents. Reducing agents, such as sodium formaldehyde sulfoxylate and erythorbates are representative. Oxidizing agents, such as hydrogen peroxide and *t*-butyl hydroperoxide (t-BHP) are representative.

The ethylene and, optionally, other monomers, then are introduced to the reactor at a pressure of less than about 2000 psig (13,891 kPa), typically, from 1400 to 2000 psig (9754 to 13,891 kPa), with agitation, and the temperature increased to reaction temperature. Initiator, vinyl acetate, and emulsifier are staged or added incrementally over the reaction period, and the reaction mixture maintained at reaction temperature for a time required to produce the desired product.

The formation of polymers suited for forming heat seal adhesives for forming nonwoven laminate structures is highly influenced by the stabilizer system. First, the stabilizing system must support the formation of emulsions having a solids content of at least 35% by weight, generally 45% and higher. Second, the stabilizing system should be one that does not interrupt ethylene domains leading to crystalline polyethylene segments within the polymer. Protective colloids can be used, such as poly(vinyl alcohol). The preferred protective colloid employed as a component of one of the suitable stabilizing system described herein is a cellulosic colloid. An example of a cellulosic protective colloid is hydroxyethyl cellulose. The protective colloid can be used in amounts of about 0.1 to 10 wt%, preferably 0.5 to 5 wt%, based on the total monomers.

The surfactant or emulsifier can be used at a level of about 1 to 10 wt%, preferably 1.5 to 6 wt%, based on the total weight of monomers, and can include any of the known and conventional surfactants and emulsifying agents, principally the nonionic, anionic, and cationic materials, heretofore employed in aqueous emulsion polymerization. Among the anionic surfactants found to provide good results are alkyl sulfates and ether sulfates, such as sodium lauryl sulfate, sodium octyl sulfate, sodium tridecyl sulfate, and sodium isodecyl sulfate, sulfonates, such as dodecylbenzene sulfonate, alpha-olefin sulfonates and sulfosuccinates, and phosphate esters, such as the various linear alcohol phosphate esters, branched alcohol phosphate esters, and alkylphenolphosphate esters. Examples of suitable nonionic surfactants include the Igepal surfactants which are members of a series of alkylphenoxy poly(ethyleneoxy)ethanols having alkyl groups containing from about 7 to 18 carbon atoms, and having from about 4 to 100 ethyleneoxy units, such as the octylphenoxy poly(ethyleneoxy)ethanols, nonylphenoxy poly(ethyleneoxy)ethanols, and dodecylphenoxy poly(ethyleneoxy)ethanols. Others include fatty acid amides, fatty acid esters, glycerol esters, and their ethoxylates, ethylene oxide/propylene oxide block polymers, secondary alcohol ethoxylates, and tridecylalcohol ethoxylates.

Chain transfer agents, water soluble or oil soluble, can be use in the preferred polymerization process for the formation of semi-crystalline EVA polymers for nonwoven laminating adhesive applications. Any of the common chain transfer agents known in the emulsion polymerization art can be used, such as mercaptan derivatives. Dodecylmercaptan is an example of an oil soluble chain transfer agent. For example, dodecylmercaptan can be dissolved in vinyl acetate monomer and introduced to the reactor via the monomer delay feed. Chain transfer agents are typically used in amounts less than 2.0 weight percent, preferably less than 1.0 weight percent, based on total polymer weight.

Average particle size distributions for the polymer particles of the emulsion polymers of this invention range from 0.05 microns to 2 microns, preferably 0.10 microns to 1 micron.

In an example of using the emulsion polymers of this invention for forming nonwoven laminate structures, the emulsion polymers can be applied (via spray, foam saturation, and other saturation methods) to a nonwoven substrate or web, dried, stored, and shipped to an end user where the nonwoven substrate or web is laminated with another nonwoven substrate, foam substrate, particularly polystyrene or polyurethane or web via the application of heat and pressure, typically in a heated mold. Typical adhesive add-on levels to the nonwoven substrate are 1-15 wt%, preferably 5-10 wt%. As mentioned, non-block is essential for stacking or winding into large rolls, and storage of the coated nonwoven substrate. Yet, a heat seal is desired at moderate pressures and temperatures to maximize production and afford a strong laminate bond.

The invention is further clarified by a consideration of the following examples, which are intended to be purely exemplary of the invention. Ethylene levels in the polymer were determined by mass balance.

### BLOCKING

Blocking is defined as unwanted adhesion between touching layers of an adhesive coated nonwoven substrate to itself or an uncoated nonwoven substrate. This can occur under moderate pressure, temperature, or high relative humidity (RH) as coated substrates are rolled or wound upon themselves or stacked upon themselves during storage or prior to use. Blocking can cause increased tension during roll unwinding which can slow overall processing speeds. Blocking can also cause some degree of fiber tear between nonwoven substrates possibly interrupting or removing the heat seal adhesive coating.

### TENSILE STORAGE MODULUS

Tensile storage modulus as a function of temperature was measured at a test frequency of 6.28 rad/sec and expressed as dynes/cm². More specifically, dynamic mechanical testing of the polymer samples for measuring tensile storage modulus was accomplished using the following procedure. ASTM-D-4065-94 and ASTM-D-5026-94 were used as guidelines for this procedure. Each polymer emulsion was cast as a film and allowed to dry a minimum of several days at ambient conditions. The dry film thickness was typically in the range of 0.3 to 0.5 mm. For samples that did not film form adequately at room temperature, the polymers were compression molded at 100 to 150 °C. The specimens used for testing were die cut from the film and were about 6.3 mm wide and 30 mm long. The specimens were tested on a Rheometrics Solid Analyzer (RSA II), from Rheometric Scientific, Inc., to obtain the tensile dynamic mechanical properties. Data were obtained every 6 °C over the -100 to +200 °C range using a fiber/film fixture and a deformation frequency of 6.28 rad/sec. To help ensure linear viscoelastic conditions, the applied strains were typically 0.05% in the glassy region and up to 1% in the rubbery region. A soak time of one minute was used at each temperature to ensure isothermal conditions. For each temperature, the RSA II calculated the tensile storage modulus (E'), tensile loss modulus (E"), and tangent delta (tan δ) based on the width, thickness and length of the sample.

### MEASUREMENT OF T_{g}, Tₘ, AND ΔH_{f}

T_{g}, Tₘ, and ΔH_{f} were determined via differential scanning calorimetry (DSC) using a TA Instruments Thermal Analyst 3100 with DSC 2010 module. Polymer samples were thoroughly dried prior to testing. Samples were held at 100 °C in the calorimeter for 5 minutes, cooled to -75 °C, and then the scan acquired at a heating rate of 20 °C per minute up to a final temperature of 200 °C. The T_{g} corresponds to the extrapolated onset values obtained from the baseline shift at the glass transition during the heating scan. The melting point temperature corresponds to the peak in the heat flow curve. The heat of fusion was calculated by integrating the area under the melting endotherm; the baseline for this integration was constructed by extrapolating the linear region of the heat flow curve after the melt, back to the point of intersection with the heat flow curve before the melt.

The following examples are provided to illustrate various embodiments of the invention and are not intended to restrict the scope thereof.

### HEAT SEAL

Heat seal testing was performed on a Sencorp Heatseal unit, Model # 12ASL/1. Both upper and lower jays/platens were heated. Peel strength was measured using an Instron tensile tester, Model # 1122, and results were reported in grams/inch. For heat sealing, a 5-6 inch section of an adhesive coated sample was folded in half, and a one-inch area exposed to the heated platens and subsequently heat sealed together. There was an unsealed lead on each end of the folded sample, one of which was placed in the upper jaw of the Instron, and the other in the lower jaw. The jaw span was approximately one inch. The upper and lower jaws were then moved in opposite directions while the Instron measured the strength of the peel in the heat sealed area of the sample. An average peel strength over a one inch heat sealed area was reported. Zero peel strength indicates that the sample fell apart and no peel strength could be measured.

### Example 1

### PREPARATION OF A POLYMER CONTAINING 55% ETHYLENE, 42.5% VINYL ACETATE, AND 2.5% ACRYLIC ACID USING AN ANIONIC SURFACTANT AND COLLOID STABILIZER SYSTEM

A polymer emulsion containing crystalline ethylene segments was prepared by the following procedure: A 35-gallon stainless steel pressure reactor was charged with the following mixture:

| Material | Mass charged, g |
|---|---|
| DI Water | 30,842 |
| Aerosol MA801 | 385.5 |
| Natrosol 250GR (2%) HEC | 11,565 |
| Sodium citrate | 39 |
| 95:5 Vinyl Acetate/Acrylic acid mixture | 120 |

| | |
|---|---|
| Aerosol MA80I, supplied by Cytec, is a dihexyl ester of sodium sulfosuccinic acid. Natrosol 259 GR is hydroxyethyl cellulose supplied by Rhodia. | |

The following delay mixtures were utilized:

| Material | Mass charged, g |
|---|---|
| Aqueous 10.0 % ammonium persulfate containing 3.5 % sodium bicarbonate | 4780 |
| Rhodacal DS-10, diluted to 15% active | 10,023 |
| 95:5 Vinyl Acetate:Acrylic acid mixture | 25,794 |
| Ethylene | 1400 psig for 5.5 hours |

| | |
|---|---|
| Rhodacal DS-10 is a sodium dodecyl benzene sulfonate anionic surfactant supplied by Rhodia | |

Agitation at 50 rpm was begun with a nitrogen purge. Agitation was then increased to 375 rpm and the reactor heated to 80 °C. After pressurizing the reactor with ethylene to 1400 psig, 578 g of initiator solution was added at a rate of 34.0 grams/minute. When the 578 grams of initiator had been added, the initiator delay rate was reduced to 11.6 grams/minute. At initiation, the monomer delay was begun at 115.7 g/minute and the surfactant delay was begun at 27.8 g/minute. Ethylene pressure of 1400 psig was maintained for 330 minutes. The vinyl acetate delay was stopped at the 3 hour mark. The ethylene supply was stopped at the 330 minute mark. The surfactant delay and initiator delay were stopped at the 360 minute mark, followed by holding the reaction mixture at temperature for another 30 minutes. The reaction was then cooled to 35 °C, transferred to a degasser, and Rhodaline 675 defoamer was added. The following properties of the resulting emulsion copolymer were measured:

| Copolymer Composition (by solids calculation) | 55% Ethylene |
|---|---|
| | 42.5% Vinyl acetate |
| | 2.5%Acrylic acid |
| T_{g} Midpoint (°C) | -32.2 |
| Viscosity (60/12 rpm) (cps) | 1950 / 4590 |
| % solids | 50.3 |
| pH | 4.25 |
| Tₘ (°C) / Heat of Fusion (J/g) | 88.2 / 21.1 |

### Example 2

### HEAT SEAL TESTING

A nonwoven substrate derived from a chemically bound (Airflex@ 192 VAE polymer binder) airlaid web of cellulosic fibers was oversprayed with the polymer emulsion from Example 1. Add-on levels of 2.5 and 5 wt % were evaluated for heat seal adhesive performance. After allowing the oversprayed web to dry, it was heat sealed to itself at various temperatures, pressures, and dwell times, and the peel strengths of each evaluated as noted in the table below. The control was the same chemically bound airlaid web oversprayed with Airflex 401 VAE.

| | Peel Strength, g/inch | | | | |
|---|---|---|---|---|---|
| | Heat Seal after 30 psig, 15 sec. Dwell Time | | | | |
| | 300 °F | 320 °F | 340 °F | 360 °F | 380 °F |
| Ex.1 polymer (2.5% add-on) | 0 | 0 | 50.3 | 73.4 | 122.7 |
| Control (2.5% add-on) | 0 | 0 | 79.7 | 84.6 | 97.0 |
| Ex.1 polymer (5% add-on) | 57.9 | 72.7 | 105.1 | 200.3 | 205.9 |
| Control (5% add-on) | 0 | 79.2 | 77.8 | 105.3 | 149.1 |

| | Peel Strength, g/inch | | | | |
|---|---|---|---|---|---|
| | Heat Seal after 30 psig, 60 sec. Dwell Time | | | | |
| | 300 °F | 320 °F | 340 °F | 360 °F | 380 °F |
| Ex.1 polymer (2.5% add-on) | 0 | 0 | 83.2 | 103.9 | 134.4 |
| Control (2.5% add-on) | 0 | 0 | 108.6 | 112.4 | 152.7 |
| Ex.1 polymer (5% add-on) | 77.5 | 96.4 | 208.2 | 259.2 | 308.2 |
| Control (5% add-on) | 0 | 127.5 | 145.8 | 212.7 | 199.8 |

| | Peel Strength, g/inch | | | | |
|---|---|---|---|---|---|
| | Heat,Seal after 60 psig, 15 sec. Dwell Time | | | | |
| | 300 °F | 320 °F | 340 °F | 360 °F | 380 °F |
| Ex.1 polymer (2.5% add-on) | 0 | 0 | 48.5 | 114.7 | 133.9 |
| Control (2.5% add-on) | 0 | 0 | 109.9 | 130.9 | 140.2 |
| Ex.1 polymer (5% add-on) | 63.8 | 85.9 | 199.6 | 247.1 | 276.1 |
| Control (5% add-on) | 0 | 114.0 | 149.2 | 119.4 | 229.6 |

| | Peel Strength, g/inch | | | | |
|---|---|---|---|---|---|
| | Heat Seal After 60 psig, 60 sec. Dwell Time | | | | |
| | 300 °F | 320 °F | 340 °F | 360 °F | 380 °F |
| Ex. 1 polymer (2.5% add-on) | 0 | 0 | 91.6 | 155.0 | 188.6 |
| Control (2.5% add-on) | 0 | 0 | 148.0 | 150.7 | 171.0 |
| Ex. 1 polymer (5% add-on) | 130.7 | 169.9 | 214.1 | 346.9 | 407.0 |
| Control (5% add-on) | 0 | 157.3 | 218.5 | 224.1 | 231.5 |

Airflex 192 VAE polymer emulsion is an alkylphenol ethoxylate free, aqueous VAE polymer designed for nonwoven webs applications. It has polymerized units of vinyl acetate, ethylene, N-methylolacrylamide and acrylamide; but it has no ethylene crystallinity.

Airflex 401 VAE polymer emulsion is an entirely amorphous VAE polymer adhesive designed for use in nonwoven webs. It has a Tg of about -15 °C.

The results indicate that the nonwoven laminate construction formed above containing the VAE polymer from Example 1 gives excellent peel strength indicating the emulsion polymers described herein are suitable for replacing the typical solid resin hot melt adhesives commonly used for such laminations. Further the data indicate that the peel strengths are significantly improved at the 5% add-on level for the polymer of Example 1, compared to Airflex 401 VAE polymer control, a commonly used VAE adhesive for less demanding nonwoven adhesive applications. At the 5% add-on level, the peel strengths for the polymer of Example 1 are particularly noteworthy when the lamination process utilizes low temperatures (300 °F) where adhesion is achieved compared to no adhesion for Airflex 401 VAE polymer, and they are further noteworthy at higher temperatures (e.g., 360 °F) where the peel strengths can be as much as three times greater than Airflex 401 VAE polymer. At a 2.5 % add-on level, peel strength achieved with the polymer of Example 1 is about equal to or higher than the Airflex 401 VAE control at 360 °F and 380 °F. Airflex 401 VAE polymer, being a low Tg VAE polymer and all amorphous, does not possess the necessary non-block characteristics to permit its use as a pre-applied adhesive for use in the described application.

The emulsion polymer compositions as described herein, such as the one produced in Example 1, can be coated onto a substrate designed for lamination, the water removed, the coated substrate then rolled or stacked and stored without adhesion occurring (i.e., nonblock). Further, the adhesive can be activated at a later time under heat and/or pressure to adhere the coated nonwoven substrate to another desirable substrate to obtain the desired laminate construction.

### Example 3

### SOUND ABSORBENT LAMINATE COMPRISED OF A NONWOVEN SUBSTRATE

A laminate suited for use a sound absorbent article in an automotive application can be prepared as follows:

Spray coat a standard commercial web, referred to as a shoddy pad, with the emulsion polymer (first diluted to 20-30% solids) described in Example 1. The shoddy pad is comprised of a conglomerate of fibers of pulp and synthetic polymer and is commonly referred to as a low loft shoddy pad. Dry the emulsion coated low loft, shoddy pad in an oven for 2.5 minutes at 320 °F in order to remove the water. Roll up and stack the resulting adhesive polymer coated low loft, shoddy pad for shipment to the end user.

To form a sound absorbing laminate, unroll the adhesive coated low loft shoddy pad and position a second, uncoated (or coated) high loft shoddy pad on top of, or in contact with, the adhesive side of the adhesive coated low loft shoddy pad. Then place the multi-layer construction into a mold and subject it to heat and pressure sufficient to effect adhesion between the two shoddy pads. Trim the resulting laminate for final application.

### EXAMPLE 4

### SOUND ABSORBING LAMINATE FOR AUTOMOTIVE APPLICATION COMPRISED OF A NONWOVEN SUBSTRATE AND A POLYSTYRENE FOAM CORE

A thermoformable laminate for use in an automotive head-liner application can be formed by first forming a nonwoven web of polyethylene fibers coated with the emulsion of Example 1, and drying the coated nonwoven web leaving an adherent film of vinyl acetate-ethylene-acrylic acid polymer. The resulting nonwoven web will have a thickness of about 1½ inches and a thermoplastic adhesive level of about 2.5% by weight. Roll the coated nonwoven web upon itself for shipment to an end use fabricator.

At the end user fabrication site, the nonwoven web can be unwound and cut into sheets. A multilayer laminate can be formed by placing one sheet of the adhesive coated nonwoven web on top of, or in contact with, a sheet of a stiff polystyrene foam core and another sheet of the adhesive coated nonwoven web in contact with the opposite side of the polystyrene foam core. The resulting laminate having the polystyrene foam core can then be cut to length and placed in a mold. Under heat and pressure the laminate can be shaped and the adhesive coated nonwoven web sheets bonded to each side of the polystyrene foam core.

The resulting laminate will have excellent resistance to delamination at temperatures equal to those high environmental temperatures that can be present n automotive interiors. That is in contrast to laminates formed from VAE pressure sensitive and laminating adhesives that do not have crystallinity and many of the other properties characteristic of the described VAE polymers.

## Claims

1. In a sound absorbing laminate having at least one layer of nonwoven fibers bonded to a sound absorbing substrate by a thermoplastic adhesive, said laminate formed by placing a layer of nonwoven fibers onto said sound absorbing substrate and applying sufficient heat to activate the thermoplastic adhesive and bond the layer of nonwoven fibers to said sound absorbing substrate, the improvement which comprises:
utilizing in said sound absorbing laminate at least one layer of a web of nonwoven fibers coated first with an aqueous emulsion of a vinyl acetate-ethylene adhesive polymer and then the water removed therefrom, said vinyl acetate-ethylene adhesive polymer comprised of crystalline ethylene segments prepared by aqueous emulsion polymerizing ethylene and vinyl acetate in the presence of a stabilizing system, said vinyl acetate-ethylene adhesive polymer having:
(a) a crystalline melting point ranging from 35 to 110 °C measured at a heat rate of 20 °C per minute; and,
(b) a tensile storage modulus of at least 1 x 10⁴ dynes/cm² at a temperature of 115 °C and measured at 6.28 rad/sec.

2. The sound absorbing laminate of Claim 1 wherein the vinyl acetate-ethylene adhesive polymer is comprised of from 25 to 80% by weight of polymerized units of vinyl acetate and from about 20 to 75% by weight of polymerized units of ethylene, based upon the total weight of the polymer.

3. The sound absorbing laminate of Claim 1 wherein the vinyl acetate-ethylene adhesive polymer is comprised of from 35 to 75% by weight of polymerized units of vinyl acetate and from about 25 to 65% by weight of polymerized units of ethylene, based upon the total weight of the polymer.

4. The sound absorbing laminate of Claim 2 wherein polymerized carboxylic acid units are present in said vinyl acetate-ethylene adhesive polymer in an amount from about 0.2 to about 10% by weight of said polymer.

5. The sound absorbing laminate of Claim 4 wherein said vinyl acetate-ethylene adhesive polymer has a tensile storage modulus of at least 2 x 10⁴ dynes/cm² at 115 °C and measured at 6.28 rad/sec.

6. The sound absorbing laminate of Claim 5 wherein the vinyl acetate-ethylene adhesive polymer is comprised of polymerized units of ethylene, vinyl acetate, and acrylic acid.

7. The sound absorbing laminate of Claim 5 wherein the crystalline heat of fusion of said vinyl acetate-ethylene adhesive polymer is from about 5 to 100 joules per gram measured at a heat rate of 20 °C per minute.

8. The sound absorbing laminate of Claim 7 wherein the glass transition temperature of said vinyl acetate-ethylene adhesive polymer is from +25 °C to about -35 °C as measured at a heat rate of 20 °C per minute.

9. The sound absorbing laminate of Claim 8 wherein crystalline thermal melting point of said vinyl acetate-ethylene adhesive polymer ranges from 50 to 90 °C as measured at a heat rate of 20 °C per minute.

10. In a process for forming a sound absorbing laminate wherein a web of nonwoven fibers is bonded to a sound absorbing substrate by the application of pressure and heat, the improvement which comprises:
(a) coating said web of nonwoven fibers with an aqueous polymer emulsion, wherein the polymer of the aqueous polymer emulsion contains emulsion polymerized units of vinyl acetate and ethylene, said polymer having:
(i) a crystalline melting point ranging from 35 to 110 °C
measured at a heat rate of 20 °C per minute; and,
(ii) a tensile storage modulus of at least 1 x 10⁴ dynes/cm² at
a temperature of 115 °C as measured at 6.28 rad/sec;
(b) drying the coated nonwoven web of fibers thereby forming a coated and dried nonwoven web;
(c) placing the coated and dried nonwoven web in contact with a sound absorbing substrate thereby forming a laminate; and,
(d) placing the laminate in a mold and applying sufficient pressure and temperature to bond the coated and dried web of nonwoven fibers to said sound absorbing substrate.

11. The process of Claim 10 wherein the sound absorbing substrate is selected from the group consisting of polystyrene, polyethylene, and polyurethane foam core.

12. The process of Claim 11 wherein the coated and dried nonwoven web of fibers formed in step (b) is wound into a roll thereby forming a rolled nonwoven web of fibers or the coated and dried nonwoven web of fibers is cut into sheets and put into stacks; subsequently unwinding the rolled nonwoven web of fibers or separating the stacked sheets, and placing the coated side of the coated and dried nonwoven web of fibers into contact with a sound absorbing substrate thereby forming a laminate.

13. The process of Claim 12 wherein the fibers of said coated and dried nonwoven web of fibers comprise synthetic polymers.

14. The process of Claim 12 wherein the fibers in said coated and dried nonwoven web fibers are selected from the group consisting of polypropylene, polyamide, polyethylene, and polyester.

15. The process of Claim 14 wherein polymerized units of vinyl acetate are present in the vinyl acetate-ethylene polymer in an amount from 15 to 90% by weight, polymerized units of ethylene are present in an amount from 10 to 85% by weight, and polymerized units of acrylic acid are present in an amount from 0.5 to 5% by weight of the polymer.

16. The process of Claim 15 wherein the crystalline heat of fusion in said vinyl acetate-ethylene adhesive polymer ranges from 15 to 70 joules per gram as measured at a heat rate of 20 °C per minute.

17. The process of Claim 12 wherein the coated side of one sheet or roll of coated and dried nonwoven web of fibers is placed in contact with one side of said sound absorbing substrate and the coated side of another sheet or roll of coated and dried nonwoven web is placed in contact with the opposite side of said sound absorbing substrate.
